# EUROPEAN PATENT SPECIFICATION

(11) **EP 0 659 954 B1**
(45) Date of publication and mention of the grant of the patent: **12.07.2000**
(21) Application number: 94120077.6
(22) Date of filing: 19.12.1994
(51) Int. Cl.: E04F 13/08, F16B 5/02

(54) **Anchor particularly for curtain walls**
Anker, insbesondere für Vorhangfassaden
Ancre, notamment pour murs-rideaux

(30) Priority: 21.12.1993 IT MI932691
(43) Date of publication of application: 28.06.1995
(73) Proprietor: BOSSONG S.r.l., 24048 Treviolo (Bergamo) (IT)
(72) Inventor: Taddei, Luciano, I-24124 Bergamo (IT)
(74) Representative: Modiano, Guido, Dr.-Ing.

(56) References cited:
- EP-A- 0 212 228
- DE-U- 8 906 426
- FR-A- 2 668 523
- GB-A- 2 155 072

## Description

The present invention relates to an anchor particularly for curtain walls.

As is known, anchors for curtain walls are already commercially available; they include an element for fixing them to the vertical wall of the building and an out-of-plumb adjustment screw which is connected to said element and lies substantially at right angles to the wall of the building.

From DE-A-89 06 426.7 it is known an anchor for curtain walls, comprising a fixing element, a spacer and a holding element; the spacer is vertically movable with respect to the fixing element and the holding element is fixed so as to be horizontally movable with respect to the spacer.

From FR-A-2 668 523 it is known an anchor for curtain walls comrising a fixing element connectable to a wall, a slider for supporting an adjustment screw and ending with an adjustable element for engaging a plate and means for vertically positioning the slider with respect to the fixing element.

With these anchors, adjustment must be possible on a vertical plane and along a horizontal line, in order to be able to correct any misalignments of the bore line with respect to the edge of the panel to be fixed; the adjustment screw that connects the panel to the anchor must furthermore allow adjustment so as to correct the so-called out-of-plumb of the wall of the building.

Currently used solutions adjust the vertical position by inserting, at the wall fixing screw, wedge-shaped elements or cams that allow correct positioning in terms of elevation; however, in all these solutions it is necessary to loosen the wall fixing screw to achieve correct positioning and then tighten said fixing screw again: this method leads to drawbacks, since it is possible to inadvertently forget to tighten the screw; the coupling of the screw in the wall may also become unstable.

Another drawback that can be ascribed to the solutions of the prior art is constituted by the fact that in order to set the adjustment screw to provide a correct plumb arrangement it is necessary to disengage the coupling element of the adjustment screw from the panel, perform the various adjustments by trial and error, and then re-engage the coupling element.

Prior art document EP-A-0 212 228 discloses an anchor provided with a horizontal adjustment screw with a captured threaded nut which enables the horizontal adjustment of the panel to take place even once the panel has been mounted.

From GB-A-2 155 072 it is known a device as defined in the preamble of claim 1.

It is evident that all the solutions according to the prior art therefore lead to considerable installation times, which are even more detrimental if one considers the large number of anchors that must be applied to install a curtain wall in a building.

A principal aim of the present invention is indeed to solve the above described drawbacks by providing an anchor, particularly for curtain walls, that allows to perform position adjustments without having to loosen the wall fixing screw and without having to uncouple the panel from the adjustment screw in order to adjust the plumb arrangement.

Within the scope of this aim, a particular object of the invention is to provide an anchor that is particularly strong from a mechanical point of view and is furthermore capable of providing a stable and durable coupling.

Another object of the present invention is to provide an anchor particularly for curtain walls that is capable of giving the greatest assurances of reliability and safety in use by virtue of its particular constructive characteristics.

Another object of the present invention is to provide an anchor that can be easily obtained starting from commonly commercially available elements and materials and is furthermore competitive from a merely economical point of view.

Therefore, according to the present invention, there is provided an anchor particularly for curtain walls, as defined in claim 1. Further characteristics and advantages will become apparent from the following detailed description of a preferred but not exclusive embodiment of an anchor particularly for curtain walls, illustrated only by way of non-limitative example in the accompanying drawings, wherein:
figure 1 is a perspective view of the anchor according to the invention;
figure 2 is an exploded perspective view of the anchor;
figure 3 is a sectional view, taken along the plane III-III of figure 1;
figure 4 is a sectional view, taken along the plane IV-IV of figure 3;
figure 5 is a sectional view, taken along the plane V-V of figure 4;
figure 6 is a perspective view of a different embodiment of the anchor;
figure 7 is an exploded perspective view of the anchor of figure 6;
figure 8 is a lateral elevation view of the anchor;
figure 9 is a sectional side view of the anchor, taken along a vertical median plane;
figure 10 is a sectional view, taken along the plane X-X of figure 8.

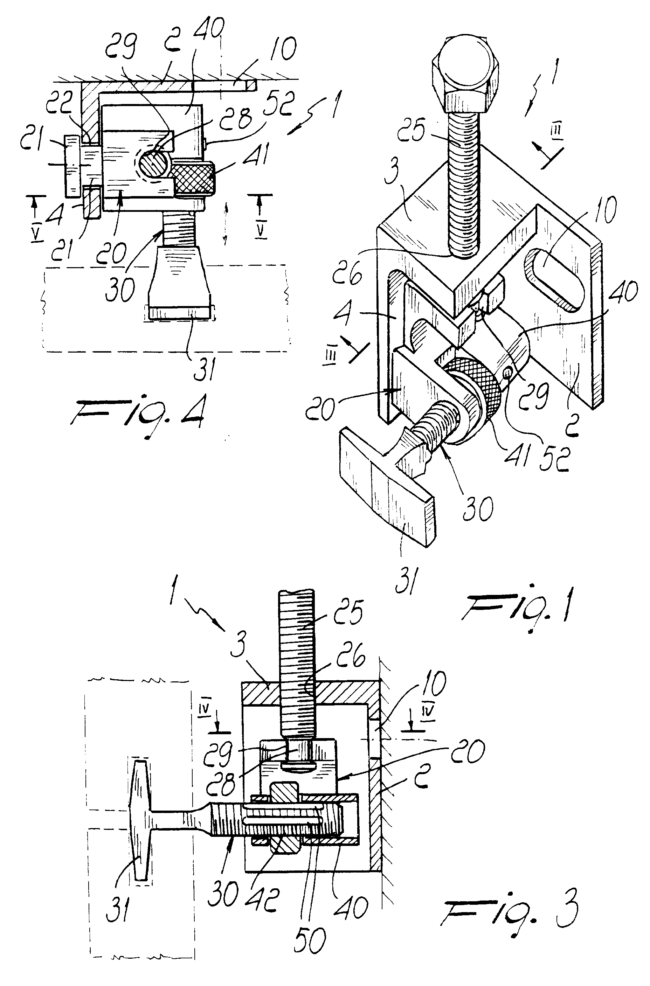

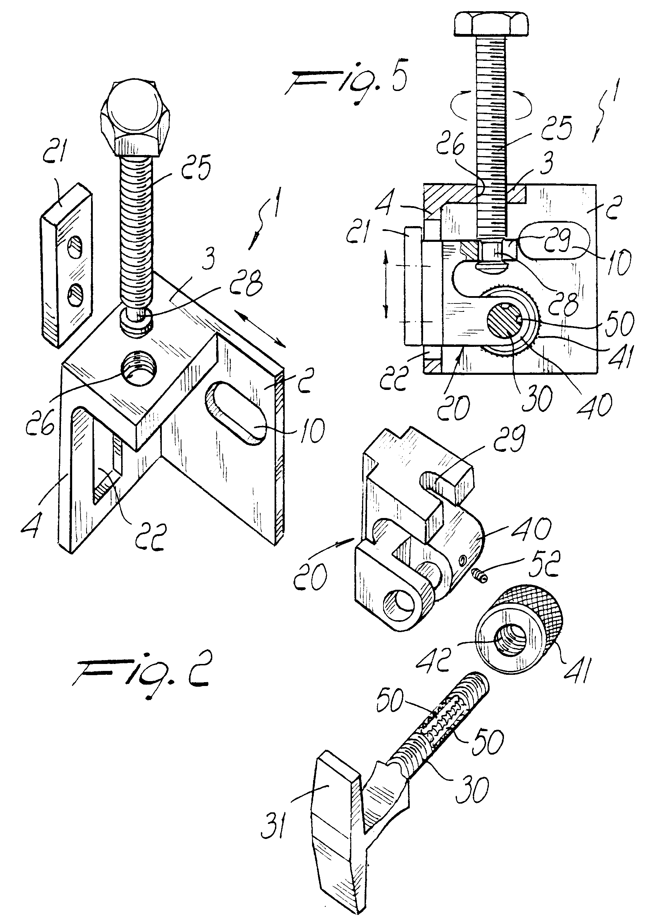

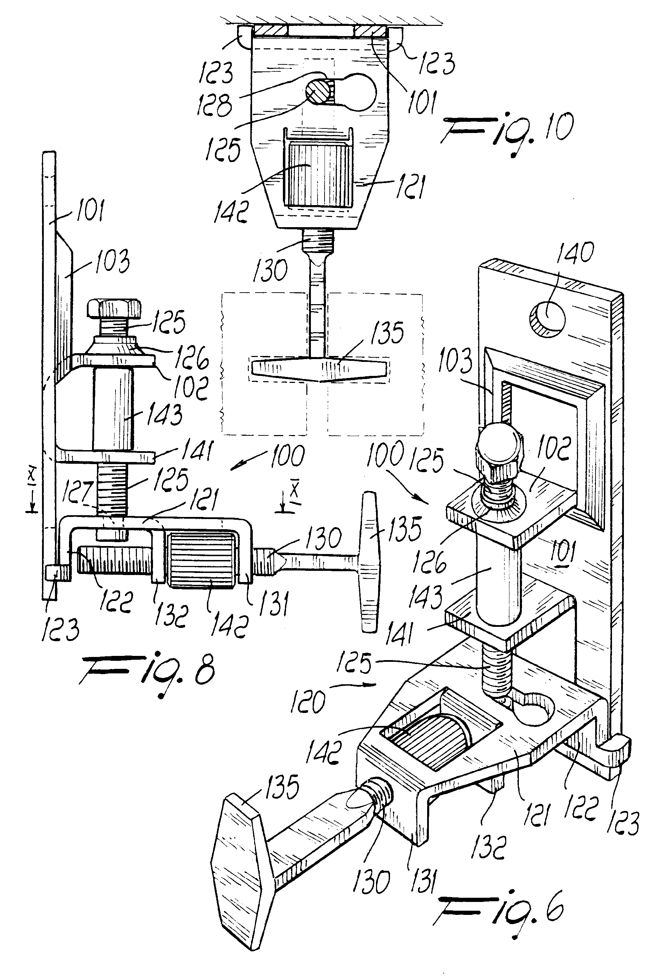

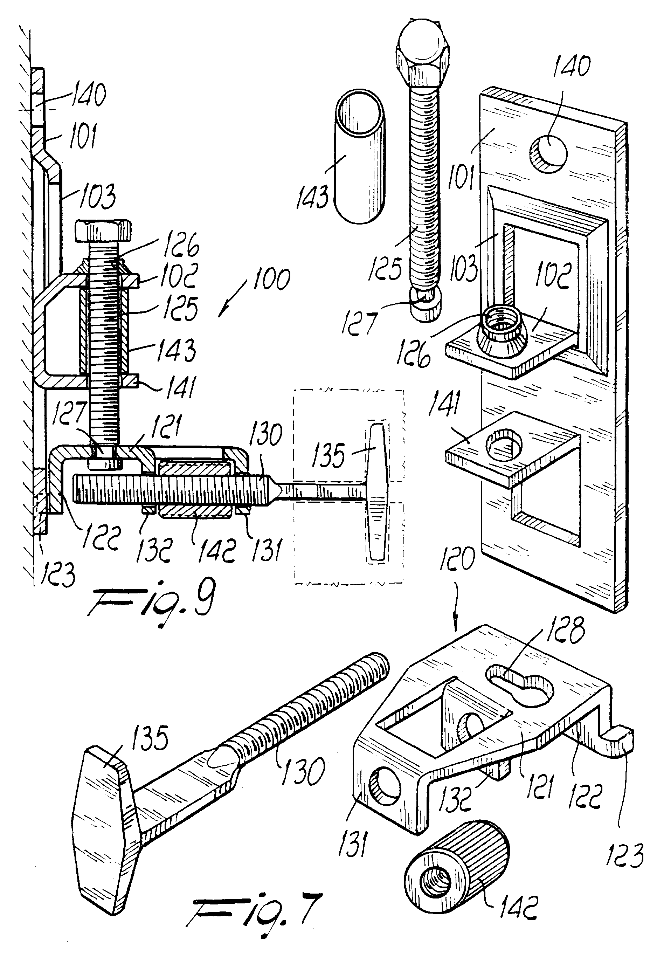

With reference to figures 1 to 5, the anchor particularly for curtain walls according to the invention comprises a fixing block, generally designated by the reference numeral 1, which is shaped so as to form a dihedral angle and has a fixing wing 2, a horizontal wing 3, and a vertical wing 4, all of which are arranged on mutually perpendicular planes. It is to be observed that figures 1 to 5 do not form subject-matter of the invention as defined in the appended claims and are disclosed as a modification of a conventional anchor as shown for example in GB-215072A.

A slotted hole 10 is formed at the fixing wing 2, lies on a horizontal plane, and allows the wall fixing screw or pin to pass, allowing adjustment along a horizontal line.

A slider 20 is slidingly associated with the vertical wing 4 and is movable along a vertical line by virtue of the presence of a sliding block 21 that couples in a corresponding slot 22 formed on the vertical wing 4.

The slider 20 is vertically movable by virtue of slider positioning means which are constituted by a bolt 25 that engages a threaded seat 26 formed on the horizontal wing 3; one end of said bolt has a groove 28 that rotatably engages a fork-like portion 29 formed by the slider.

When the bolt 25 is turned, it moves with respect to the block 1 and accordingly moves the slider 20 vertically.

The slider 20 supports an adjustment screw, generally designated by the reference numeral 30, which lies at right angles to the fixing wing 2 and ends with an element for engaging the panels to be fixed; said element can be constituted by a plate 31, by pins, or by any other element that is compatible with the fixing slot formed on the edges of the panel.

In order to adjust the position of the adjustment screw, so as to compensate for so-called out-of-plumb, said screw is supported by a sleeve 40 which is rigidly coupled to the slider 20, and a ring 41 with a female thread 42 engages the adjustment screw 30.

By acting on the threaded ring 41 it is possible to move the adjustment screw, adjusting the out-of-plumb.

In order to prevent the rotation of the adjustment screw by acting on the ring 41, longitudinal slots 50 are formed on the stem of the screw; a grub screw 52 arranged on the sleeve 40 enters said slots so that the screw can only perform a translatory motion when the ring is operated.

The grub screw 52 also provides a stroke limit to prevent the adjustment screw from being extracted too far with respect to the sleeve.

With the described arrangement it is thus possible to adjust the position in a vertical plane without having to disengage the coupling to the fixed wall, but it is possible to act on the bolt 25 so as to correctly arrange the engagement element in the panel without having to disengage the coupling to the wall of the building.

Likewise, in order to set the panels so that they are plumb it is possible to vary the position of the adjustment screw without disengaging it from the panel, since the presence of the ring 41 allows to make the adjustment screw perform a translatory motion without rotating.

According to what is shown in figures 6 to 10, which illustrate a simplified embodiment, the anchor, generally designated by the reference numeral 100, comprises a vertical fixing plate 101 and a horizontal wing 102 which is arranged at right angles to the plane of arrangement of the plate 101.

More specifically, the horizontal wing 102 is obtained by blanking in the plate 101, at a countersunk rim 103, which acts as stiffening element and as ribbing for the plate 101.

A slider, generally designated by the reference numeral 120, is slidingly associated with the plate 101 and can perform a translatory motion with respect to the vertical plate 101. The slider 120 has a U-shaped plate 121 which has, at one arm 122, tabs 123 that arrange themselves laterally adjacent to the edges of the plate 101 in order to act as guiding elements.

The translatory motion of the slider occurs by virtue of slider positioning means, which are constituted by a bolt 125 that rotatably engages a threaded seat 126 formed on the horizontal wing 102 and couples, by means of a groove 127 provided at its end, to a contoured slot 128 formed on the central portion of the U-shaped plate 121.

When the bolt 125 is turned, it performs a translatory motion with respect to the wing 102 and accordingly causes the vertical translatory motion of the slider 120.

It should also be noted that it is conceptually possible to provide the threaded seat directly on the slider and use the horizontal wing 102 as an abutment element for the head of the bolt.

The slider 120 supports an adjustment screw 130 which is rotatably supported by the outer arm 131 of the slider 120 and by an intermediate tab 132 formed by blanking in the plate 121.

A ring 142 with a female thread is provided between the outer arm 131 and the tab 132; said ring, by engaging the adjustment screw, produces the translatory motion of said adjustment screw, which ends, at its free end, with a plate or other fixing element, designated by the reference numeral 135.

It should also be added that a reinforcement wing 141 is formed by blanking in the plate 101, which has a hole 140 for applying it to the wall; said reinforcement wing is located below the horizontal wing 102 and is connected to the wing 101 by means of the interposition of a cylindrical spacer 143 which in practice forms the seat for the insertion and passage of the bolt 125.

This embodiment, too, allows to adjust the position of the vertical plane without having to release the coupling to the fixed wall, simply by acting on the bolt 125, whereas in order to align the panels vertically it is possible to change the position of the adjustment screw 130 by acting on the ring 142 without thereby having to disengage the anchor from the panel.

From the above description it is thus evident that the invention achieves the intended aim and objects, and in particular the fact is stressed that an anchor is provided which is particularly practical and versatile and also allows to perform vertical adjustment and adjust the plumb arrangement of the panels without having to disengage the coupling of the anchor to the wall and without having to disengage the panel from the anchor.

The invention thus conceived is susceptible of numerous modifications and variations, all of which are within the scope of the inventive concept.

All the details may furthermore be replaced with other technically equivalent elements.

Thus, for example, in a simplified embodiment, the fixing block may be replaced with a L-shaped fixing element which has a fixing wing and a horizontal wing which are mutually perpendicular; in this embodiment, the slider is slidingly guided on the fixing wing and is actuated by virtue of the positioning means, which are supported by the horizontal wing.

In practice, the materials employed, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An anchor particularly for curtain walls, comprising a fixing element (100) which has a vertical fixing plate (101) and a horizontal wing (102), a slider (120) for supporting an adjustment screw (130) being slidably connected to said vertical fixing plate (101), said slider (120) lying substantially at right angles to said vertical fixing plate (101) and the outer end ending with an element (135) for engaging a plate and the like, means (125,126) being furthermore provided for positioning said slider (120), said positioning means (125,126) being supported by said horizontal wing (102), characterized in that said slider (120) is constituted by a U-shaped plate (121) which has, at one (122) of its two arms, two tabs (123) that laterally engage said fixing plate (101) to act as a guiding element, said U-shaped plate (121) supporting said adjustment screw (130) with its outer arm (131) and with an intermediate tab (132).

2. The anchor of claim 1, characterized in that said horizontal wing (102) is formed by blanking a portion of said vertical fixing plate (101).

3. The anchor of one or more of the preceding claims, characterized in that said horizontal wing (102) is formed at a countersunk rim (103) adapted to act as a reinforcement element.

4. The anchor of one or more of the preceding claims, characterized in that said means for positioning said slider are constituted by a bolt (125) that rotatably engages a threaded seat (126) formed on said horizontal wing (102) and rotatably engages a contoured slot (128) formed by said U-shaped plate (121).

5. The anchor of claim 1, characterized in that said slider (120) abuts against said fixing plate (101).

6. The anchor of one or more of the preceding claims, characterized in that it comprises a reinforcement wing (141) which is formed by blanking in said vertical fixing plate (101) and is associated with said horizontal wing (102) by interposing a tubular spacer (143) that forms the seat for the passage of said bolt (125).

## Patentansprüche

1. Anker, insbesondere für Vorhangfassaden, mit einem Befestigungselement (100), das eine vertikale Befestigungsplatte (101) und einen horizontalen Flügel (102) hat, einem verschiebbar mit der vertikalen Befestigungsplatte (101) verbundenen Gleitstück (120) zum Halten einer Einstellschraube (130), das im wesentlichen rechtwinklig zu der vertikalen Befestigungsplatte (101) liegt und dessen äußeres Ende mit einem Element (135) zum Angreifen an eine Platte und dergleichen endet, wobei ferner Mittel (125, 126) zum Positionieren des Gleitstücks (120) enthalten sind, die von dem horizontalen Flügel (102) getragen werden, dadurch **gekennzeichnet,** daß das Gleitstück (120) aus einer U-förmigen Platte (121) besteht, die an einem (122) ihrer beiden Arme zwei Laschen (123) hat, die die Befestigungsplatte (101) als Führungselement seitlich berühren, und daß die U-förmige Platte (121) mit ihrem äußeren Arm (131) und einer Zwischenlasche (132) die Einstellschraube (130) hält.

2. Anker nach Anspruch 1, dadurch **gekennzeichnet,** daß der horizontale Flügel (102) durch Stanzen eines Teils der vertikalen Befestigungsplatte (101) gebildet ist.

3. Anker nach einem oder mehreren der vorhergehenden Ansprüche, dadurch **gekennzeichnet,** daß der horizontale Flügel (102) an einem gesenkten Rand (103) ausgebildet ist, der als Verstärkungselement geeignet ist.

4. Anker nach einem oder mehreren der vorhergehenden Ansprüche, dadurch **gekennzeichnet,** daß die Mittel zum Positionieren des Gleitstücks aus einem Belzen (125) bestehen, der drehbar in einen Gewindesitz (126) an dem horizontalen Flügel (102) und in einen Konturschlitz (128) in der U-förmigen Platte (121) eingreift.

5. Anker nach Anspruch 1, dadurch **gekennzeichnet,** daß das Gleitstück (120) an der Befestigungsplatte (101) anliegt.

6. Anker nach einem oder mehreren der vorhergehenden Ansprüche, dadurch **gekennzeichnet,** daß er einen Verstärkungsflügel (141) hat, der durch Stanzen der vertikalen Befestigungsplatte (101) gebildet und durch Zwischenlegen eines eine Führung für den Bolzen (125) bidenden rohrförmigen Abstandhalters (143) mit dem horizontalen Flügel (102) verbunden ist.

## Revendications

1. Dispositif d'ancrage, en particulier pour murs-rideaux comprenant un élément de fixation (100) qui précède une plaque de fixation verticale (101) et une aile horizontale (102), une coulisse (120) pour supporter une vis de réglage (130) étant reliée à coulissement à ladite plaque de fixation verticale (101), ladite coulisse (120) étant disposée sensiblement à angle droit par rapport à ladite plaque de fixation verticale (101) et l'extrémité extérieure se terminant par un élément (135) pour l'engagement d'une plaque et analogue, des moyens (125, 126) étant en outre prévus pour positionner ladite coulisse (120), lesdits moyens de positionnement (125, 126) étant supportés par ladite aile horizontale (102), caractérisé en ce que ladite coulisse (120) est constituée par une plaque en forme de U (121) qui possède, à l'un (122) de ses deux bras, deux pattes (123) qui viennent en engagement latéral avec ladite plaque de fixation (101) pour agir comme un élément de guidage, ladite plaque en forme de U (121) supportant ladite vis de réglage (130) avec son bras extérieur (131) et avec une patte intermédiaire (132).

2. Dispositif d'ancrage selon la revendication 1, caractérisé en ce que ladite aile horizontale (102) est formée en découpant une portion de ladite plaque de fixation verticale (101).

3. Dispositif d'ancrage selon une ou plusieurs des revendications précédentes, caractérisé en ce que ladite aile horizontale (102) est formée sur un rebord en dépouille (103) apte à agir comme un élément de renforcement.

4. Dispositif d'ancrage selon une ou plusieurs des revendications précédentes, caractérisé en ce que lesdits moyens pour positionner ladite coulisse sont constitués par un boulon (125) qui s'engage à rotation dans un siège taraudé (126) formé sur ladite aile horizontale (102) et s'engage à rotation dans une fente profilée (128) formée par ladite plaque en forme de U (121).

5. Dispositif d'ancrage selon la revendication 1, caractérisé en ce que ladite coulisse (120) est en butée contre ladite plaque de fixation (101).

6. Dispositif d'ancrage selon une ou plusieurs des revendications précédentes, caractérisé en ce qu'il comprend une aile de renforcement (141) qui est formée par découpage dans ladite plaque de fixation verticale (101) et est associée avec ladite aile horizontale (102) en interposant une entretoise tubulaire (143) qui forme le siège pour le passage dudit boulon (125).
